# EUROPEAN PATENT APPLICATION

(11) **EP 4 675 805 A1**
(43) Date of publication of application: **07.01.2026**
(21) Application number: 24878539.6
(22) Date of filing: 25.06.2024
(51) Int. Cl.: H01M 50/317

(54) **BATTERY AND ELECTRIC DEVICE**

(30) Priority: 19.10.2023 CN 202322812716 U
(71) Applicant: Contemporary Amperex Technology Co., Limited, Ningde, Fujian 352100 (CN)
(72) Inventor: LI, Yao, Ningde, Fujian 352100 (CN); GAO, Xiongwei, Ningde, Fujian 352100 (CN)
(74) Representative: Lorenz Seidler Gossel Part. mbB
(86) International application number: PCT/CN2024/101280
(87) International publication number: WO 2025/081886

(57) **Abstract**

A battery (100) and an electric apparatus are disclosed. The battery includes a cell (101), an insulating structure (103), and a metal plate member (105). The insulating structure (103) is sandwiched between the cell (101) and a first portion (1051). The first portion (1051) is provided with a collection structure (1051a) on a side facing the insulating structure (103). A second portion (1052) is provided with an exhaust structure (1052a), and a valve member (106) and the exhaust structure (1052a) are disposed opposite each other. The collection structure (1051a) is configured to collect at least a portion of electrolyte vapor ejected through the valve member (106) and diffused between the insulating structure (103) and the first portion (1051). Based on this, the insulating structure (103) maintains insulation in a thermal runaway state, preventing electrical conduction between the cell (101) and the metal plate member (105), thereby avoiding high-voltage sparking.

## Description

### CROSS-REFERENCE TO RELATED APPLICATIONS

The present application claims priority to Chinese Patent Application No. 202322812716.9, filed with the China National Intellectual Property Administration on October 19, 2023, and entitled "BATTERY AND ELECTRIC APPARATUS", which is incorporated herein by reference in its entirety.

### TECHNICAL FIELD

Embodiments of the present application relate to the field of new energy, and in particular, to a battery and an electric apparatus.

### BACKGROUND

Typically, a cell is provided with an explosion-proof valve, and the battery is further provided with a metal plate located on an outer side of the explosion-proof valve. The metal plate is provided with an exhaust hole, the exhaust hole is opposite to the explosion-proof valve, the outer side of the metal plate is configured as a gas collection chamber, and a single-layer or multi-layer insulation layer is provided between the cell and the metal plate. Electrolyte vapor generated during thermal runaway of the cell is discharged into the gas collection chamber through the explosion-proof valve and the exhaust hole. During this process, some electrolyte vapor, after being ejected from the explosion-proof valve, does not pass through the exhaust hole into the gas collection chamber but instead enters the insulation layer and deposits therein. This weakens or even fails the insulation effect of the insulation layer, posing a risk of explosion of the cell due to electrical conduction between the cell and the metal plate.

### SUMMARY

An objective of embodiments of the present application is to provide a battery and an electric apparatus to address the technical problem in existing batteries where thermal runaway may easily cause electrical conduction between the cell and the metal plate, leading to explosion of the cell.

To achieve the above objective, the technical solution adopted by the present application is as follows:
A battery is provided. The battery includes a cell, an insulating structure, and a metal plate member, the metal plate member including a first portion and a second portion, and the cell being provided with a valve member; and
the insulating structure being sandwiched between the cell and the first portion, the first portion being provided with a collection structure on a side facing the insulating structure, the second portion being provided with an exhaust structure, and the valve member and the exhaust structure being disposed opposite each other;
where the collection structure is configured to collect at least a portion of electrolyte vapor ejected through the valve member and diffused between the insulating structure and the first portion.

In the battery provided by this technical solution, electrolyte vapor generated during thermal runaway of the cell is partially discharged through the valve member and the exhaust structure to a side of the metal plate member facing away from the insulating structure, while another portion enters between the insulating structure and the first portion. The first portion is provided with a collection structure, which allows the electrolyte vapor between the insulating structure and the first portion to be collected into the collection structure, preventing this portion of the electrolyte vapor from depositing between the insulating structure and the first portion. The insulating structure maintains effective insulation in a thermal runaway state, preventing electrical conduction between the cell and the metal plate member, thereby avoiding high-voltage sparking.

In some embodiments, the insulating structure has a proximal end close to the valve member and a distal end away from the valve member, and the proximal end covers the collection structure.

The collection structure is relatively close to the valve member, allowing the electrolyte vapor to travel a short path and enter the collection structure after passing only through the proximal end of the insulating structure. The electrolyte vapor is collected before entering most regions of the insulating structure, and most regions of the insulating structure are not introduced by the electrolyte vapor, effectively maintaining the insulation effectiveness thereof while improving collection efficiency.

In some embodiments, the battery further includes a film structure, where the film structure is sandwiched between the insulating structure and the first portion, the film structure covers the collection structure and is configured to fail when temperature and/or pressure reaches a preset range so as to allow at least a portion of the electrolyte vapor to enter the collection structure.

The film structure prevents the insulating structure in a fluid state from entering the collection structure. The film structure allows for a specific tension, the electrolyte vapor enters between the insulating structure and the film structure, and the electrolyte vapor breaks through the film structure to enter the collection structure.

In some embodiments, the collection structure includes a groove, and an opening of the groove faces the insulating structure.

The groove is provided in the first portion, and the electrolyte vapor is collected in the first portion.

In some embodiments, the collection structure further includes an adsorbent material member accommodated in the groove.

The adsorbent material member has adsorptive properties, adsorbing the electrolyte vapor, thereby improving the collection efficiency and storage stability of the electrolyte vapor.

In some embodiments, the groove passes through the first portion along a thickness direction of the first portion; or an end of the groove facing away from the insulating structure is closed to form a groove bottom.

The electrolyte vapor enters the collection structure and is either collected in the first portion or passes through the collection structure to a side of the first portion facing away from the insulating structure, and the electrolyte vapor is discharged from the first portion.

In some embodiments, the first portion is attached to the insulating structure, and the opening of the groove is close to the insulating structure.

The first portion is attached to the insulating structure, providing tightness between the cell, the insulating structure, and the first portion.

In some embodiments, the battery further includes a sealing member, the second portion is spaced apart from the cell, the sealing member is accommodated between the second portion and the cell, and disposed around an outer side of the valve member and an outer side of the exhaust structure.

Providing a sealing member in a path where electrolyte vapor enters between the first portion and the insulating structure improves the sealing performance of the path, and reduces the probability of electrolyte vapor entering between the first portion and the insulating structure.

In some embodiments, one side of the sealing member abuts against the insulating structure, and another side of the sealing member facing away from the side abuts against the second portion.

One side and another side of the sealing member respectively abut against the insulating structure and the second portion, improving sealing performance.

In some embodiments, the first portion is provided with a plurality of collection structures disposed around the exhaust structure.

Between the first portion and the insulating structure, the plurality of collection structures disposed circumferentially respectively collect the electrolyte vapor from a plurality of circumferentially distributed regions, enabling efficient and comprehensive collection of the electrolyte vapor.

In some embodiments, the insulating structure is provided with an accommodation hole, and at least a portion of the valve member is disposed in the accommodation hole.

The valve member is provided on the cell, and a portion of the valve member located outside the cell is accommodated in the accommodation hole of the insulating structure. Except for the region occupied by the valve member relative to the exhaust structure, the insulating structure completely isolates the cell from the metal plate member, ensuring the effectiveness of insulation performance.

In some embodiments, the insulating structure includes a structural adhesive insulation layer.

The structural adhesive insulation layer has high corrosion resistance, providing specific resistance to corrosion by the electrolyte vapor, and reducing the erosion of the electrolyte vapor to the structural adhesive insulation layer.

In some embodiments, the cell has a first side and a second side disposed opposite each other, and a peripheral side connecting the first side and the second side;
the cell includes an electrode, the electrode being provided on the first side or the second side; and
the insulating structure, the metal plate member, and the valve member are provided on a side where any one of the first side, the second side, or the peripheral side is located.

During thermal runaway of the cell, the electrolyte vapor is discharged from the cell from the side where any one of the first side, the second side, or the peripheral side is located, allowing flexible selection of the discharge side for the electrolyte vapor based on the structure of the cell and the application scenario of the cell.

Another objective of embodiments of the present application is to provide an electric apparatus, where the electric apparatus includes the battery provided by embodiments of the present application.

The beneficial effects of the electric apparatus provided by embodiments of the present application, compared to the prior art, are consistent with the beneficial effects of the battery provided by embodiments of the present application compared to the prior art. Details are not described herein again.

### BRIEF DESCRIPTION OF DRAWINGS

To describe the technical solutions in the embodiments of the present application clearly, the following briefly describes the accompanying drawings required for describing the embodiments or the prior art. Apparently, the accompanying drawings in the following description show only some embodiments of the present application, and persons of ordinary skill in the art may still derive other drawings from these accompanying drawings without creative efforts.
FIG. 1 is a longitudinal cross-sectional view of a battery in the prior art;
FIG. 2 is a schematic diagram of an electric apparatus according to an embodiment of the present application;
FIG. 3 is a schematic diagram of an overall structure of a battery according to an embodiment of the present application;
FIG. 4 is a schematic diagram of a cell according to an embodiment of the present application;
FIG. 5 is a longitudinal cross-sectional view of a battery according to an embodiment of the present application, where the collection structure has a groove bottom;
FIG. 6 is a longitudinal cross-sectional view of a battery according to an embodiment of the present application, where the collection structure passes through the thickness of the first portion;
FIG. 7 is a longitudinal cross-sectional view of a battery according to an embodiment of the present application, where the collection structure has a groove bottom and is accommodated in an adsorbent material member;
FIG. 8 is a longitudinal cross-sectional view of a battery according to an embodiment of the present application, where the collection structure passes through the thickness of the first portion and is accommodated in an adsorbent material member; and
FIG. 9 is a longitudinal cross-sectional view of a battery according to an embodiment of the present application, where the battery includes a plurality of cells.

Reference signs in the drawings:
10'. cell; 20'. explosion-proof valve; 30'. insulation film; 40'. insulation layer; 50'. insulation coating; 60'. metal plate; 70'. exhaust hole; 80'. bottom protective plate; 90'. gas collection chamber; 100'. electrode; and
100. battery; 1000. electric apparatus; 101. cell; 102. insulation film; 103. insulating structure; 104. film structure; 105. metal plate member; 106. valve member; 107. bottom protective plate; 108. gas collection chamber; 109. adsorbent material member; 1010. sealing member; 1011. first side; 1012. second side; 1013. peripheral side; 1014. electrode; 1031. proximal end; 1032. distal end; 1051. first portion; 1052. second portion; 1051a. collection structure; 1052a. exhaust structure; 105a. first cooling plate; 105b. second cooling plate; 1001. battery module; 1002. box; 10021. first portion; 10022. second portion; 10001. controller; and 10002. motor.

### DESCRIPTION OF EMBODIMENTS

To describe the technical problems solved by the present application, technical solutions, and beneficial effects of the present application clearly, the following describes the present application in detail with reference to the embodiments and accompanying drawings. It should be understood that the specific embodiments described herein are merely used to explain the present application but are not intended to limit the present application.

It should be noted that when a component is referred to as being "fastened to" or "disposed on" another component, it may be directly or indirectly fastened to the another component. When a component is referred to as being "connected to" another component, it may be directly or indirectly connected to the another component.

It should be understood that terms such as "length", "width", "upper", "lower", "front", "rear", "left", "right", "vertical", "horizontal", "top", "bottom", "inside", "outside", and the like are based on the orientations or positional relationships shown in the accompanying drawings. These terms are merely for ease and brevity of description of the present application rather than indicating or implying that the apparatuses or elements mentioned must have specific orientations or must be constructed or manipulated according to specific orientations, and therefore shall not be construed as any limitations on the present application.

In addition, the terms "first" and "second" are merely for the purpose of description, and shall not be understood as any indication or implication of relative importance or any implicit indication of the number of technical features indicated. Therefore, a feature limited by "first" or "second" can explicitly or implicitly include one or more such features. In the description of the present application, "a plurality of" means two or at least two unless otherwise specifically stated.

Thermal runaway of a cell refers to a phenomenon where the cell experiences uncontrolled thermal generation due to one or more triggers. Thermal runaway causes the cell temperature to rise sharply, simultaneously releasing a large amount of heat and harmful gases, posing a risk of battery explosion.

For example, a process of battery self-explosion caused by thermal runaway of a cell is described as follows: It starts with the decomposition of a negative SEI (Solid Electrolyte Interface, solid electrolyte interface) on a negative electrode inside the cell, followed by the decomposition and melting of a separator isolating the negative electrode and an electrolyte. The negative electrode reacts with the electrolyte, and a positive electrode and the electrolyte decompose, causing a large-scale internal short circuit in the cell, leading to the electrolyte entering a combustion state, resulting in thermal runaway of the cell, and causing the battery to self-ignite and explode. The high-temperature smoke containing a large amount of heat and harmful electrolyte vapor can collectively be referred to as electrolyte vapor.

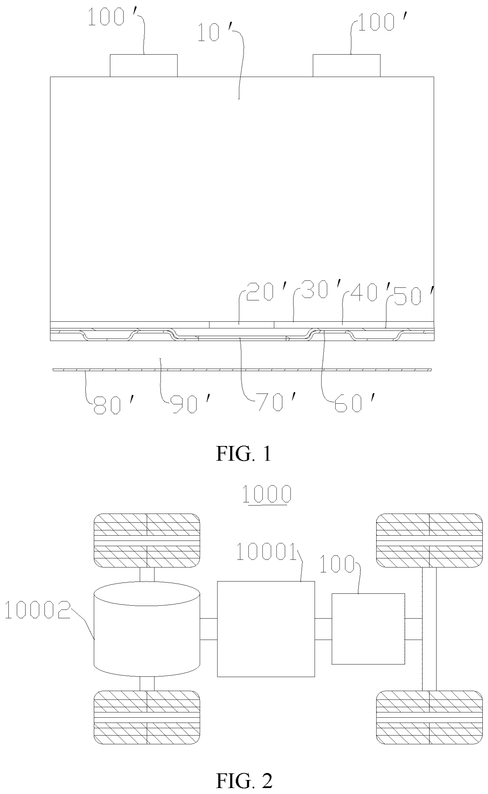

As shown in FIG. 1, as an example, FIG. 1 is a longitudinal cross-sectional view of a battery. The cell 10' is provided with an explosion-proof valve 20'. An outer side of the explosion-proof valve 20' is provided with a metal plate 60', the metal plate 60' is provided with an exhaust hole 70', and the exhaust hole 70' is opposite to the explosion-proof valve 20'. The outer side of the metal plate 60' is configured as a gas collection chamber 90', and a single-layer or multi-layer insulation layer 40' is provided between the cell 10' and the metal plate 60'. Electrolyte vapor generated during thermal runaway of the cell 10' is discharged into the gas collection chamber 90' through the explosion-proof valve 20' and the exhaust hole 70'. During this process, the electrolyte vapor enters the insulation layer 40' and deposits therein. This weakens or even fails the insulation effect of the insulation layer 40', which serves as a trigger leading to thermal runaway of the cell 10'.

As an example, the cell 10' is provided with an explosion-proof valve 20' on a side opposite to the side where the positive and negative electrodes 100' are located, along with an insulation film layer 30' and the insulation layer 40' stacked with each other. The explosion-proof valve 20' is disposed at the center, the insulation film layer 30' and the insulation layer 40' are provided on the outer side of the explosion-proof valve 20', and the explosion-proof valve 20' is sealed with the insulation film layer 30' and the insulation layer 40'.

As an example, the metal plate 60' may be a metal water-cooling plate, and the exhaust hole 70' is disposed at the center of the metal plate 60'. The side of the metal plate 60' facing the cell 10' is coated with an insulation coating 50', and the insulation film layer 30', the insulation layer 40', the insulation coating 50', and the metal plate 60' are sequentially stacked. A side of the metal plate 60' facing away from the cell 10' is provided with a bottom protective plate 80', and the metal plate 60' and the bottom protective plate 80' are spaced apart to form the gas collection chamber 90'.

During thermal runaway of the cell 10', the temperature of the cell 10' rises sharply and generates electrolyte vapor at high speed. Some vapor is discharged into the gas collection chamber 90' through an exhaust path. Under the impact of high-temperature and high-speed vapor, the metal plate 60' deforms, and some vapor enters between the insulation layer 40' and the insulation coating 50'. Due to the deposition of the electrolyte vapor in the insulation layer 40' and the insulation coating 50', the insulation function is weakened or even fails, leading to electrical conduction between the cell 10' and the metal plate 60'. The voltage between the cell 10' and the metal plate 60' reaches a high level, causing high-voltage sparking, thereby resulting in an explosion of the cell 10'.

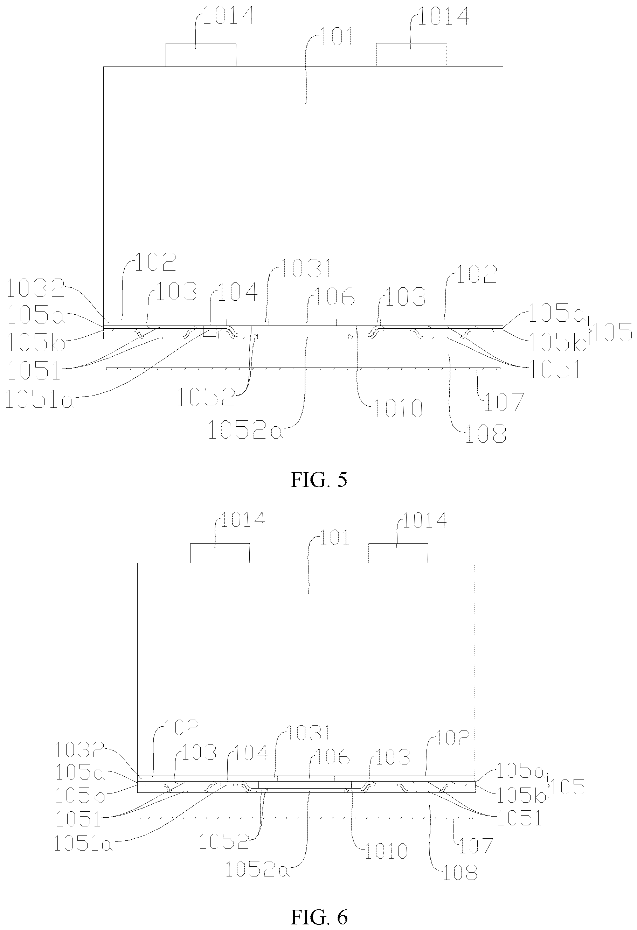

Based on the above considerations, to prevent high-voltage sparking between the cell and the metal plate during thermal runaway of the cell, a battery is provided. As shown in FIGs. 5 and 6, the battery includes a cell 101, an insulating structure 103, and a metal plate member 105. where the cell 101 is provided with a valve member 106, and the metal plate member 105 includes a first portion and a second portion. The insulating structure 103 is sandwiched between the cell 101 and the first portion 1051, the first portion is provided with a collection structure 1051a on a side facing the insulating structure 103, the second portion is provided with an exhaust structure 1052a passing through a thickness direction thereof, where the valve member 106 and the exhaust structure 1052a are disposed opposite each other.

Electrolyte vapor generated during thermal runaway of the cell 101 is partially discharged through the valve member 106 and the exhaust structure 1052a to a side of the metal plate member 105 facing away from the insulating structure 103, while another portion enters between the insulating structure 103 and the first portion. The first portion is provided with a collection structure 1051a, and the collection structure 1051a is recessed from a side where the insulating structure 103 is located toward another side of the first portion, allowing the electrolyte vapor between the insulating structure 103 and the first portion to be collected into the collection structure 1051a, preventing this portion of the electrolyte vapor from depositing between the insulating structure 103 and the first portion. The insulating structure 103 maintains effective insulation in a thermal runaway state, preventing electrical conduction between the cell 101 and the metal plate member 105, thereby avoiding high-voltage sparking.

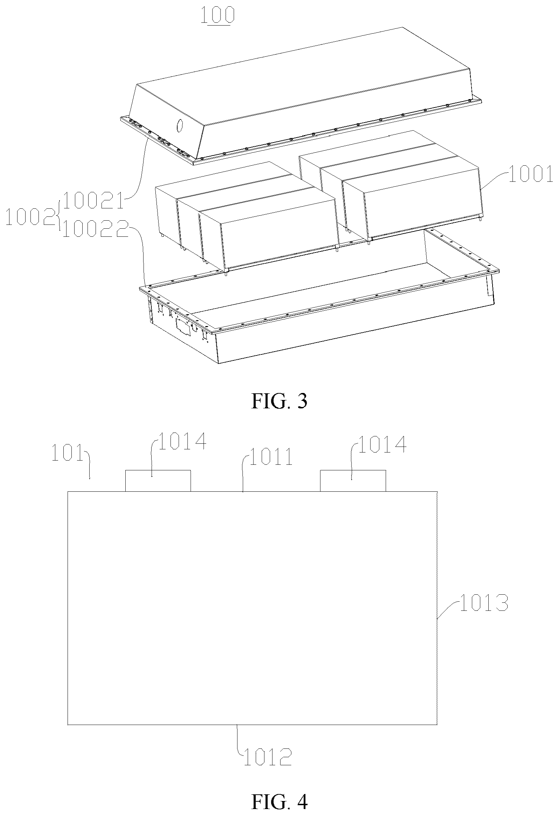

In some embodiments, the battery 100 refers to a physical module including one or more battery cells for providing voltage and capacity. For example, the battery may include a battery cell, a battery module 1001, or a battery pack. One battery cell may include a cell. As shown in FIG. 3, typically, a battery includes a battery cell and a box 1002 for accommodating the battery cell. The box 1002 is configured to accommodate and encapsulate one or more battery cells or a battery module 1001, the box 1002 is configured to protect the battery cells and prevent liquids or other foreign matters from affecting the charging or discharging of the battery cells.

The battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. The battery cell may be cylindrical, flat, cuboid, or of other shapes. Battery cells are divided into three types by packaging method: cylindrical cell, prismatic cell, and pouch cell.

A battery cell is the smallest element constituting a battery 100. In the battery 100, the battery cell may be provided in plurality, and the plurality of battery cells may be connected in series, parallel, or series-parallel, where being connected in series-parallel means a combination of series and parallel connections of the plurality of battery cells. The plurality of battery cells may be directly connected in series, parallel, or series-parallel, and then an entirety of the plurality of battery cells is accommodated in the box 1002. Certainly, the battery 100 may be formed by a plurality of battery cells being connected in series, parallel or series-parallel first to form a battery module 1001 and then a plurality of battery modules 1001 being connected in series, parallel or series-parallel to form an entirety which is accommodated in a box 1002.

The box 1002 provides an accommodation space for the battery cells, and the box 1002 may be a variety of structures. As shown in FIG. 3, in some embodiments, for example, a box 1002 is provided, the box 1002 including a first portion 10021 and a second portion 10022, where the first portion 10021 and the second portion 10022 fit together so that the first portion 10021 and the second portion 10022 jointly define an accommodation space for the battery cell. The second portion 10022 may be a shell structure with an opening at one side, and the first portion 10021 may be a plate-like structure, the first portion 10021 covers the opening side of the second portion 10022, and the first portion 10021 and the second portion 10022 together define the accommodation space. Alternatively, both the first portion 10021 and the second portion 10022 may be shell structures with an opening at one side, and the opening side of the first portion 10021 covers the opening side of the second portion 10022. Certainly, the box 1002 formed by the first portion 10021 and the second portion 10022 may be of various shapes, for example, cylinder or cuboid.

The electric apparatus 1000 provided by embodiments of the present application may include, but is not limited to, a mobile phone, a tablet computer, a laptop computer, an electric toy, an electric tool, an electric bicycle, an electric vehicle, a ship, and a spacecraft. The spacecraft includes an airplane, a rocket, a space shuttle, a spaceship, and the like. The electric toy includes a fixed or mobile electric toy, for example, a game console, an electric toy car, an electric toy ship, and an electric toy airplane.

As shown in FIG. 2, the electric apparatus 1000 may be a vehicle, and the vehicle may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be disposed at the bottom, front, or rear of the vehicle. The battery 100 may be configured to supply power to the vehicle. For example, the battery 100 may be used as an operational power source for the vehicle. The vehicle 1000 may further include a controller 10001 and a motor 10002, where the controller 10001 is configured to control the battery 100 to supply power to the motor 10002, for example, to satisfy power needs of start, navigation, and driving of the vehicle. In some embodiments, the battery 100 can be used as not only the operational power source for the vehicle but also a driving power source for the vehicle, replacing or partially replacing fossil fuel or natural gas to provide driving traction for the vehicle.

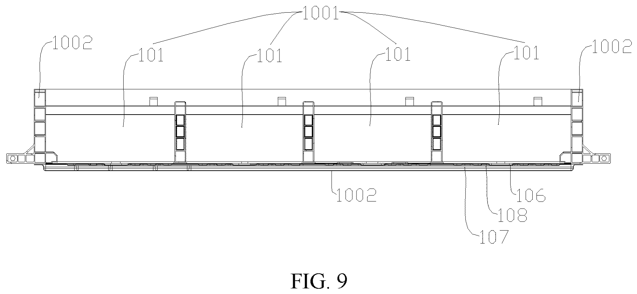

The battery 100 and electric apparatus 1000 provided by embodiments of the present application are now described with reference to FIGs. 4 to 9.

As shown in FIGs. 5 to 8, the battery provided by embodiments of the present application includes a cell 101, an insulating structure 103, a metal plate member 105, and a valve member 106, where the metal plate member 105 includes a first portion 1051 and a second portion 1052. The insulating structure 103 is sandwiched between the cell 101 and the first portion 1051, where the first portion 1051 is provided with a collection structure 1051a, and the collection structure 1051a is recessed from a side where the insulating structure 103 is located toward another side. The cell 101 is provided with a valve member 106, and the second portion 1052 is provided with an exhaust structure 1052a passing through the thickness thereof, where the valve member 106 and the exhaust structure 1052a are disposed opposite each other.

The cell 101 refers to a single electrical core containing a positive electrode 1014, and the cell 101 serves as an electric storage unit, which is the smallest unit of a power battery 100. Taking a lithium-ion cell 101 as an example, the operating voltage of a single lithium-ion cell 101 is between 3 V and 5 V. To meet the high voltage and high capacity requirements of the electric apparatus 1000, a plurality of cells 101 are typically connected in series and parallel to form the battery 100, and the battery 100 supplies electrical energy to the electric apparatus 1000.

The insulating structure 103 is a structure that does not conduct current under normal conditions, and the insulating structure 103 is configured to isolate conductors to prevent current conduction between the conductors. The metal casing of the cell 101 is conductive, and the metal plate member 105 is conductive. The insulating structure 103 is sandwiched between the cell 101 and the first portion 1051 to prevent high-voltage sparking due to current conduction between the cell 101 and the metal plate member 105.

The metal plate member 105 refers to a plate-like structure made of metal material, and the metal plate member 105 has a specific thickness and extension area, with a large ratio of extension area to thickness. Typically, the metal plate member 105 is provided on any side of the cell 101, and the metal plate member 105 may be stacked with the side of the cell 101. The surface of the cell 101 may be covered with an insulation film 102, and the insulating structure 103 is provided between the insulation film 102 and the metal plate member 105. The insulating structure 103 may be a fluid adhesive, and the insulation film 102 and the metal plate member 105 are bonded using the fluid adhesive. The insulating structure 103 is formed after the fluid adhesive solidifies, achieving both bonding and insulation of the metal plate member 105. The metal plate member 105 may be a single-layer plate structure or a multi-layer plate structure formed by stacking.

The first portion 1051 is a portion of the metal plate member 105, specifically the portion opposite to the insulating structure 103 along a thickness direction of the metal plate member 105. The insulating structure 103 is provided to isolate the first portion 1051 from the cell 101, and the collection structure 1051a is provided to collect the electrolyte vapor entering between the first portion 1051 and the insulating structure 103, preventing loss of isolation function between the first portion 1051 and the cell 101 due to the damage to the insulating structure 103.

The second portion 1052 is a portion of the metal plate member 105 distinct from the first portion 1051, and the second portion 1052 and the first portion 1051 are sequentially disposed along an extension direction of the metal plate member 105. The second portion 1052 is configured to be provided with the exhaust structure 1052a. The second portion 1052 is positioned opposite to the valve member 106, and the exhaust structure 1052a is opposite to the valve member 106. During thermal runaway of the cell 101, the valve member 106 is in an open state, and the valve member 106 and the exhaust structure 1052a form an exhaust path, most of the electrolyte vapor is discharged from the cell 101 through the exhaust path, and a small portion of the electrolyte vapor enters between the first portion 1051 and the insulating structure 103.

The collection structure 1051a is a structure formed on the first portion 1051 with a specific accommodation space, and is constructed with a collection opening facing the insulating structure 103. The collection opening collects the electrolyte vapor between the first portion 1051 and the insulating structure 103, the electrolyte vapor may be stored in the collection structure 1051a or may be discharged through the collection structure 1051a to a side of the first portion 1051 facing away from the insulating structure 103.

The exhaust structure 1052a is a structure formed on the second portion 1052 that passes through the second portion 1052 in a thickness direction thereof. The exhaust structure 1052a is configured to discharge the electrolyte vapor from the valve member 106 when the valve member 106 is in an open state during thermal runaway of the cell 101. The valve member 106 and the exhaust structure 1052a provide a path for discharging the electrolyte vapor from the cell 101.

The valve member 106 is a valve structure provided on a shell wall of the cell 101 and is capable being opened under set conditions. Typically, the valve member 106 includes a valve body with a passage and a valve core that is disposed in the passage and can move relative to the valve body. The valve body is fixedly provided on the cell 101. Under normal conditions, the valve core closes the passage of the valve body. Under set conditions, the valve core moves relative to the valve body to open the passage, allowing the valve member 106 in an open state. For example, the valve member 106 may be an explosion-proof valve, a one-way valve, or other valve structures. For example, the set conditions may be a set pressure or a set temperature, determined based on the type of valve member 106 selected.

Electrolyte vapor generated during thermal runaway of the cell 101 is partially discharged through the valve member 106 and the exhaust structure 1052a to the side of the metal plate member 105 facing away from the insulating structure 103, while another portion enters between the insulating structure 103 and the first portion 1051. The first portion 1051 is provided with a collection structure 1051a, and the collection structure 1051a is recessed from the side where the insulating structure 103 is located toward another side of the first portion 1051, which allows the electrolyte vapor between the insulating structure 103 and the first portion 1051 to be collected into the collection structure 1051a, preventing this portion of the electrolyte vapor from depositing between the insulating structure 103 and the first portion 1051. The insulating structure 103 maintains effective insulation in a thermal runaway state, preventing electrical conduction between the cell 101 and the metal plate member 105, thereby avoiding high-voltage sparking.

In some embodiments, the first portion 1051 is disposed around an outer side of the second portion 1052.

The first portion 1051, the insulating structure 103, and the portion of the cell 101 opposite to the insulating structure 103 are stacked and surround the exhaust structure 1052a, effectively ensuring that most of the electrolyte vapor is discharged from the cell 101 through the valve member 106 and the exhaust structure 1052a.

For example, the cell 101 is a cylindrical structure, and may be circular or rectangular. The first portion 1051 and the insulating structure 103 are provided on one side of the cell 101 along an axis thereof. Within a projection range of a single cell 101 along the axis thereof, the second portion 1052 is provided in a central region, the exhaust structure 1052a may be provided in a central region of the second portion 1052, or the exhaust structure 1052a may be formed by removing all material of the second portion 1052. The first portion 1051 is disposed around the outer side of the second portion 1052, surrounding the second portion 1052.

In some other embodiments, the first portion 1051 may be provided beside the second portion 1052. For example, the cell 101 is a cubic structure, and on at least one side of the cell 101, the second portion 1052 may occupy a small portion close to an edge, where most of the other portion of this side is opposite to the first portion 1051, and the insulating structure 103 is provided therebetween.

In some embodiments, the first portion 1051 is disposed around the outer side of the second portion 1052, and the first portion 1051 is provided with a plurality of collection structures 1051a disposed circumferentially. The structures of the plurality of collection structures 1051a may be the same or different, the spacing between adjacent collection structures 1051a may be the same or different, and the distance of each collection structure 1051a from the second portion 1052 may be the same or different.

Between the first portion 1051 and the insulating structure 103, the plurality of collection structures 1051a disposed circumferentially respectively collect the electrolyte vapor from a plurality of circumferentially distributed regions, enabling efficient and comprehensive collection of the electrolyte vapor.

In some embodiments, the insulating structure 103 has a proximal end 1031 close to the valve member 106 and a distal end 1032 away from the valve member 106, and the proximal end 1031 covers the collection structure 1051a.

The proximal end 1031 refers to the portion of the insulating structure 103 close to the valve member 106, and the proximal end 1031 may be in contact with and seal with the sidewall of the valve member 106. The collection structure 1051a is disposed on an outer side of the valve member 106 and is covered by the proximal end 1031. For example, the first portion 1051 is disposed around the outer side of the second portion 1052, the insulating structure 103 is disposed around the outer side of the valve member 106, and the proximal end 1031 refers to an inner end of the insulating structure 103.

The distal end 1032 refers to the portion of the insulating structure 103 away from the valve member 106, and a path length for the electrolyte vapor to reach the distal end 1032 is greater than a path length to reach the proximal end 1031. For example, the first portion 1051 is disposed around the outer side of the second portion 1052, the insulating structure 103 is disposed around the outer side of the valve member 106, and the distal end 1032 refers to the outer end of the insulating structure 103.

The collection structure 1051a is relatively close to the valve member 106, the electrolyte vapor enters the collection structure 1051a through a shorter path and only passes through the proximal end 1031 of the insulating structure 103. The electrolyte vapor is collected before entering most regions of the insulating structure 103, and most regions of the insulating structure 103 are not entered by the electrolyte vapor, effectively maintaining the insulation effectiveness thereof while improving collection efficiency.

As shown in FIG. 5, the proximal end and the distal end are defined based on the respective distances from the valve member 106, and the widths of the two ends in a radial direction of the valve member 106 can be determined based on the collection needs for the electrolyte vapor. Typically, the width of the proximal end 1031 is smaller than the width of the distal end 1032.

In some embodiments, the battery includes a film structure 104, the film structure 104 is sandwiched between the insulating structure 103 and the first portion 1051, and the film structure 104 covers the collection structure 1051a.

The film structure 104 refers to a thin, soft, transparent sheet with a specific tension, capable of deforming adaptively to the contour of external objects and easily being pierced under external force, typically referring to a structure formed by mixing one or more materials on the surface of a substrate. For example, the film structure 104 may be formed by directly coating a material on the side of the first portion 1051 facing the insulating structure 103. The coating material includes, but is not limited to, polymers, such as one or more substances including plastic, rubber, fiber, resin, and the like, and may use biaxially oriented PEE or PE materials.

In some embodiments, an extension area of the film structure 104 is consistent with an extension area of the insulating structure 103, with the two extension areas completely overlapping. In some embodiments, the extension area of the film structure 104 is smaller than the extension area of the insulating structure 103, provided that the extension area of the film structure 104 is larger than the collection opening of the collection structure 1051a facing the insulating structure 103 to fully cover the collection opening.

The film structure 104 prevents the insulating structure 103, when in a fluid state, from entering the collection structure 1051a. The film structure 104 has a specific tension, allowing the electrolyte vapor to enter between the insulating structure 103 and the film structure 104. The electrolyte vapor breaks through the film structure 104 to enter the collection structure 1051a.

As shown in FIG. 5, in some embodiments, the collection structure 1051a includes a groove, and an opening of the groove faces the insulating structure 103.

The groove is a structure extending from a surface of a component into the interior of the component, forming a specific space. The groove may be of any shape, including but not limited to, square grooves, circular grooves, other regular-shaped grooves, or irregular-shaped grooves.

The groove is provided in the first portion 1051, and the electrolyte vapor is collected in the first portion 1051, thereby preventing the electrolyte vapor from depositing between the insulating structure 103 and the first portion 1051.

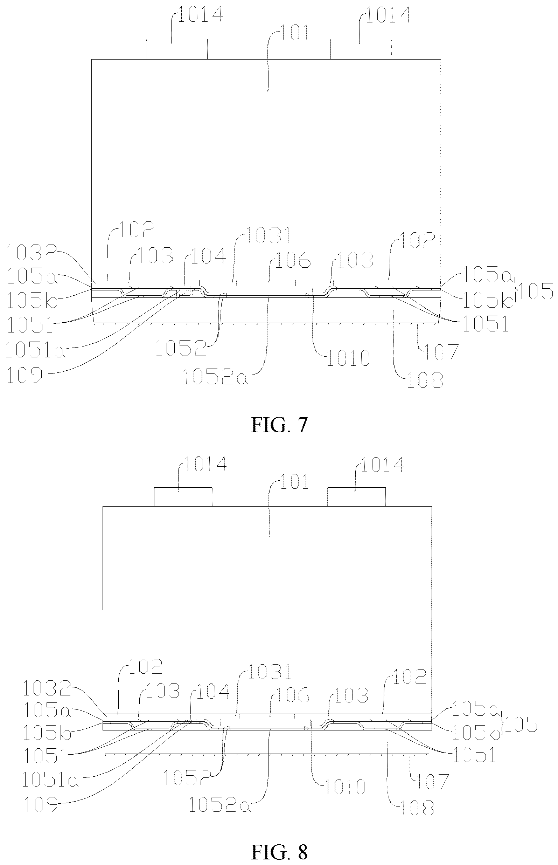

As shown in FIGs. 7 and 8, in some embodiments, the collection structure 1051a accommodates an adsorbent material member 109.

The adsorbent material member 109 refers to a material piece whose surface can adsorb molecules or ions from the surrounding medium, thereby causing the surrounding medium to be accumulated on the surface thereof or interior thereof. For example, the adsorbent material member 109 may be formed from a microporous adsorbent material with pores. When a fluid or vapor medium is in contact with the microporous adsorbent material, components of the medium are adsorbed by the adsorbent material and accumulated on the surface thereof or interior thereof. Adsorbent materials include, but are not limited to, various activated carbon adsorbent materials made from carbonaceous raw materials, as well as metal or non-metal oxide adsorbent materials, such as silica gel, alumina, molecular sieves, natural clay, and the like.

The adsorbent material member 109 has adsorptive properties, adsorbing the electrolyte vapor, improving the collection efficiency and storage stability of the electrolyte vapor.

As shown in FIG. 6, in some embodiments, the groove passes through the first portion 1051 along a thickness direction of the first portion 1051; or the end of the groove facing away from the insulating structure 103 is closed to form a groove bottom.

The electrolyte vapor enters the collection structure 1051a and is either collected in the first portion 1051 or passes through the collection structure 1051a to the side of the first portion 1051 facing away from the insulating structure 103, and the electrolyte vapor is discharged from the first portion 1051.

As shown in FIG. 7, in some embodiments, the collection structure 1051a is a groove structure, and the adsorbent material member 109 may be accommodated within the groove structure and supported by the bottom surface of the groove structure.

As shown in FIG. 8, in some embodiments, the collection structure 1051a passes through the thickness of the first portion 1051, and the adsorbent material member 109 may be fitted in the collection structure 1051a by interference fit, or a convex ring or convex pillar structure may be provided on the inner wall of the collection structure 1051a to fixedly support the adsorbent material member 109 in the collection structure 1051a.

In some embodiments, the first portion 1051 is attached to the insulating structure 103, and the opening of the groove is proximate to the insulating structure 103.

The first portion 1051 is attached to the insulating structure 103, providing tightness between the cell 101, the insulating structure 103, and the first portion 1051.

In some embodiments, the insulating structure 103 includes one or more insulation layers, with one or more types of insulation layers.

An insulation layer refers to a layered structure with insulation functions, and the insulation layer may be a layered structure formed from a solid material, such as a plastic layer, a glass layer, a ceramic layer, a rubber layer, and the like, or a layered structure formed by a fluid material after solidification, such as a structural adhesive insulation layer formed by the solidification of a fluid adhesive.

The number and types of insulation layers in the insulating structure 103 are selectable, improving the diversity of the setting of the insulating structure 103.

In some embodiments, the insulating structure 103 includes a structural adhesive insulation layer.

The structural adhesive insulation layer has high corrosion resistance, providing specific resistance to corrosion by the electrolyte vapor, and reducing the erosion of the electrolyte vapor to the structural adhesive insulation layer. Additionally, the structural adhesive provides bonding properties, bonding the metal plate member 105 and the cell 101, improving the stability of the internal structure of the battery 100.

As shown in FIGs. 4 to 8, in some embodiments, the battery includes a sealing member 1010, the second portion 1052 is spaced apart from the cell 101, the sealing member 1010 is accommodated between the second portion 1052 and the cell 101, and the sealing member 1010 is disposed around the outer side of the valve member 106.

In some embodiments, one side of the sealing member 1010 abuts against the cell 101 or the insulating structure 103, and another side of the sealing member 1010 abuts against the second portion 1052.

The sealing member 1010 refers to a component that prevents the electrolyte vapor from leaking between the adjacent joint surfaces of the second portion 1052 and the cell 101, or the adjacent joint surfaces between the second portion 1052 and the insulating structure 103, when the metal plate member 105 does not deform. It is typically annular and elastic, relying on elasticity to tightly compress between the adjacent joint surfaces.

Providing a sealing member 1010 in a path where the electrolyte vapor enters between the first portion 1051 and the insulating structure 103 improves the sealing performance of the path, and reduces the probability of electrolyte vapor entering between the first portion 1051 and the insulating structure 103.

In some embodiments, the metal plate member 105 may be a box wall of the box 1002 of the battery 100, and the insulating structure 103 is provided between the box wall and the cell 101, preventing high-voltage sparking due to electrical conduction between the box wall and the cell 101 through the collection structure 1051a. For example, it may be the box wall of the first portion 10021 and the second portion 10022 as shown in FIG. 3.

In some embodiments, one side of the sealing member 1010 abuts against the insulating structure 103, and another side of the sealing member 1010 facing away from the side abuts against the second portion 1052.

One side and another side of the sealing member 1010 respectively abut against the insulating structure 103 and the second portion 1052, improving sealing performance.

In some embodiments, the interior of the metal plate member 105 is provided with a cooling channel, and the cooling channel is used for the flow of cooling liquid.

The metal plate member 105 serves as a cooling structure for cooling the cell 101, and the insulating structure 103 is provided between the cooling structure and the cell 101, preventing high-voltage sparking due to electrical conduction between the cooling structure and the cell 101 through the collection structure 1051a.

As an optional cooling structure, the metal plate member 105 includes a first cooling plate 105a and a second cooling plate 105b stacked together, the insulating structure 103 is sandwiched between the cell 101 and the first cooling plate 105a, and the cooling channel is formed between the first cooling plate 105a and the second cooling plate 105b. The first cooling plate 105a is provided with at least a portion of the collection structure 1051a, and the exhaust structure 1052a passes through the thickness of the first cooling plate 105a and the thickness of the second cooling plate 105b.

As another optional cooling structure, one of the first cooling plate 105a and the second cooling plate 105b is provided with a cooling channel, while the other has a hollow design to allow a specific degree of deformation, providing space for variation in the total thickness of the metal plate member 105.

Based on the above configurations of the metal plate member 105, as well as the configurations of the collection structure 1051a and the exhaust structure 1052a, the options for the metal plate member 105 can be increased.

In some embodiments, the central region of the insulating structure 103 is provided with an accommodation hole, at least a portion of the valve member 106 is disposed in the accommodation hole, and the exhaust structure 1052a is provided in the central region of the metal plate member 105.

The valve member 106 is provided on the cell 101, and the portion of the valve member 106 located outside the cell 101 is accommodated in the accommodation hole of the insulating structure 103. A sealed design is achieved between the valve member 106 and the insulating structure 103. The region of the cell occupied by the valve member 106 is opposite to and spaced apart from the region of the metal plate member occupied by the exhaust structure 1052a to achieve insulation. The insulating structure 103 isolates a non-valve-member region of the cell 101 from a non-exhaust-structure region of the metal plate member 105, ensuring the overall insulation effectiveness between the cell and the metal plate member.

Certainly, in some embodiments, the accommodation hole may also be provided in a region offset from the center of the insulating structure 103, and the exhaust structure 1052a may also be provided in a region offset from the center of the metal plate member 105. However, the insulating structure 103 still surrounds the valve member 106, and the first portion 1051 also surrounds the second portion 1052.

As shown in FIG. 4, in some embodiments, the cell 101 has a first side 1011 and a second side 1012 disposed opposite each other, and a peripheral side 1013 connecting the first side 1011 and the second side 1012. The cell 101 includes an electrode 1014, and the electrode 1014 is provided on the first side 1011 or the second side 1012. The insulating structure 103, the metal plate member 105, and the valve member 106 are provided on a side where any one of the first side 1011, the second side 1012, or the peripheral side 1013 is located.

During thermal runaway of the cell 101, the electrolyte vapor is discharged from the cell 101 from the side where any one of the first side 1011, the second side 1012, or the peripheral side 1013 is located, allowing flexible selection of the discharge side for the electrolyte vapor based on the structure of the cell 101 and the application scenario of the cell 101.

As shown in FIGs. 5 to 8, in some embodiments, the cell 101 is a columnar structure, and may be cylindrical or prismatic, or the cell 101 is a cubic structure. The cell 101 has a central axis, and the cell 101 has a first side 1011 and a second side 1012 disposed opposite each other along the central axis, and a peripheral side 1013 disposed around the central axis. The electrode 1014 is provided on the first side 1011, and the insulating structure 103 and the metal plate member 105 are provided on the side where the second side 1012 is located.

In some embodiments, the insulating structure 103, the metal plate member 105, and the valve member 106 are provided on the side of the cell 101 facing away from the electrode 1014. The first portion 1051 of the metal plate member 105 is disposed around the outer side of the second portion 1052. The insulating structure 103 includes a structural adhesive insulation layer, and the insulating structure 103 is bonded between the first portion 1051 and the insulation film 102 on the shell wall of the cell 101. The insulating structure 103 is disposed around the outer side of the valve member 106, and a sealed design is achieved between the valve member 106 and the insulating structure 103. The exhaust structure 1052a is provided in the central region of the second portion 1052, the valve member 106 and the exhaust structure 1052a are coaxially disposed. One side of the sealing member 1010 abuts against the insulating structure 103, and another side opposite to this side abuts against the second portion 1052.

In some embodiments, the battery includes a plurality of cells 101, and the plurality of cells may be arranged at a close distance in sequence. The electrode 1014 of the plurality of cells 101 is oriented toward the same side, and the insulating structure 103, the metal plate member 105, and the valve member 106 are provided on the side of the plurality of cells 101 facing away from the electrode 1014. The insulating structure 103 and the metal plate member 105 are adapted to the plurality of cells 101 simultaneously, and each cell 101 is provided with a valve member 106.

As shown in FIG. 8, the electrode 1014 is provided at the top of the cell 101, and the insulating structure 103 and the metal plate member 105 are provided below the cell 101. The metal plate member 105 is provided with a plurality of exhaust structures 1052a, and one cell 101 occupies one exhaust structure 1052a. The plurality of valve members 106 are respectively disposed opposite to the plurality of exhaust structures 1052a, and the plurality of valve members 106 are respectively accommodated in a plurality of accommodation holes of the insulating structure 103, each being sealed with a respective accommodation hole in which it is accommodated.

Another objective of embodiments of the present application is to provide an electric apparatus 1000, where the electric apparatus 1000 includes the battery 100 as described above. The beneficial effects of the electric apparatus 1000 provided by embodiments of the present application, compared to the prior art, are consistent with the beneficial effects of the battery 100 provided by embodiments of the present application compared to the prior art. Details are not described herein again.

The foregoing descriptions are merely preferable embodiments of the present application, but are not intended to limit the present application. Any modification, equivalent replacement, or improvement made without departing from the spirit and principle of the present application shall fall within the protection scope of the present application.

## Claims

1. A battery, comprising,
a cell, an insulating structure, and a metal plate member, the metal plate member comprising a first portion and a second portion, and the cell being provided with a valve member; and
the insulating structure being sandwiched between the cell and the first portion, the first portion being provided with a collection structure on a side facing the insulating structure, the second portion being provided with an exhaust structure, and the valve member and the exhaust structure being disposed opposite each other;
wherein the collection structure is configured to collect at least a portion of electrolyte vapor ejected through the valve member and diffused between the insulating structure and the first portion.

2. The battery according to claim 1, wherein,
the insulating structure has a proximal end close to the valve member and a distal end away from the valve member, and the proximal end covers the collection structure.

3. The battery according to claim 1 or 2, wherein,
the battery further comprises a film structure, the film structure is sandwiched between the insulating structure and the first portion, and the film structure covers the collection structure and is configured to fail when temperature and/or pressure reaches a preset range so as to allow the at least a portion of electrolyte vapor to enter the collection structure.

4. The battery according to any one of claims 1 to 3, wherein,
the collection structure comprises a groove, and an opening of the groove faces the insulating structure.

5. The battery according to claim 4, wherein,
the collection structure further comprises an adsorbent material member accommodated in the groove.

6. The battery according to claim 4 or 5, wherein,
the groove passes through the first portion along a thickness direction of the first portion; or
an end of the groove facing away from the insulating structure is closed to form a groove bottom.

7. The battery according to claim 4 or 5, wherein,
the first portion is attached to the insulating structure, and the opening of the groove is close to the insulating structure.

8. The battery according to any one of claims 1 to 7, wherein,
the battery further comprises a sealing member, the second portion is spaced apart from the cell, the sealing member is accommodated between the second portion and the cell, and disposed around an outer side of the valve member and an outer side of the exhaust structure.

9. The battery according to claim 8, wherein,
one side of the sealing member abuts against the insulating structure, and another side of the sealing member facing away from the side abuts against the second portion.

10. The battery according to any one of claims 1 to 9, wherein,
the first portion is provided with a plurality of the collection structures disposed around the exhaust structure.

11. The battery according to any one of claims 1 to 10, wherein,
the insulating structure is provided with an accommodation hole, and at least a portion of the valve member is disposed in the accommodation hole.

12. The battery according to any one of claims 1 to 11, wherein,
the insulating structure comprises a structural adhesive insulation layer.

13. The battery according to any one of claims 1 to 12, wherein,
the cell has a first side and a second side disposed opposite each other, and a peripheral side connecting the first side and the second side;
the cell comprises an electrode, the electrode being provided on the first side or the second side; and
the insulating structure, the metal plate member, and the valve member are provided on a side where any one of the first side, the second side, or the peripheral side is located.

14. An electric apparatus, wherein,
the electric apparatus comprises the battery according to any one of claims 1 to 13.
